# EUROPÄISCHE PATENTANMELDUNG

(11) **EP 4 817 807 A1**
(43) Veröffentlichungstag der Anmeldung: **07.10.2026**
(21) Anmeldenummer: 25167703.5
(22) Anmeldetag: 01.04.2025
(51) Int. Cl.: B25J 9/16

(54) **VERFAHREN ZUM STEUERN EINER ROBOTERVORRICHTUNG ZUM EINSETZEN EINES ERSTEN OBJEKTS IN EIN ZWEITES OBJEKT**

(71) Anmelder: Robert Bosch GmbH, 70442 Stuttgart (DE)
(72) Erfinder: Ziesche, Hanna, 71229 Leonberg (DE); Feldman, Zohar, 35705 Haifa (IL); Choshen, Era, Giv'atayim (IL)

(57) **Zusammenfassung**

Verschiedene Aspekte betreffen ein Verfahren zum Steuern einer Robotervorrichtung zum Einsetzen eines ersten Objekts in ein zweites Objekt, das Verfahren aufweisend: Aufnehmen des ersten Objekts mittels eines Greifwerkzeugs der Robotervorrichtung; Bewegen des ersten Objekts in die Nähe des zweiten Objekts; Erfassen eines Bildes, welches das zweite Objekt und das sich in der Nähe des zweiten Objekts befindende erste Objekt zeigt; Ermitteln, unter Verwendung des und/oder eines anderen Bildes, einer ersten Transformation, welche eine Transformation zwischen einem Koordinatensystem des ersten Objekts und einem Koordinatensystem des Greifwerkzeugs ist; Ermitteln einer zweiten Transformation, indem das Bild als Eingabe und die erste Transformation als Bedingung in ein bedingtes neuronales Netzwerk eingegeben werden, wobei die zweite Transformation eine Transformation zwischen dem Koordinatensystem des Greifwerkzeugs und einem Koordinatensystem des zweiten Objekts angibt; Ermitteln, unter Verwendung der zweiten Transformation, einer Robotertrajektorie zum Einsetzen des ersten Objekts in das zweite Objekt; und Steuern der Robotervorrichtung gemäß der Robotertrajektorie.

## Beschreibung

### Stand der Technik

Das Einsetzen eines Objekts in ein anderes Objekt mittels eines Roboterarms ist ein wichtiges Problem in der Robotik, beispielsweise in der automatisierten Fertigung von Bauteilen, bei Haushaltsrobotern, etc.

Ein anschauliches Beispiel ist das Einsetzen eines Steckers in eine Steckdose. Hierbei ist es erforderlich, dass ein Roboter den Stecker detektieren kann, Aufnehmen (z.B. Greifen) kann und den aufgenommenen Stecker dann in Richtung der Steckdose bewegen und in diese präzise einsetzen kann. Diesbezüglich beschreibt O. Spector und D. Di Castro: "InsertionNet - A Scalable Solution for Insertion", arXiv:2104.1422, 2021 (im Folgenden als Referenz [1] bezeichnet) einen zweistufigen Ansatz, bei welchem der aufgenommene Stecker zuerst in die Nähe der Steckdose bewegt wird und dann anhand von Bildern eine Differenz zwischen einem Koordinatensystem des Steckers und einem Koordinatensystem der Steckdose ermittelt wird, um den Stecker gemäß der Differenz in die Steckdose einzusetzen.

### Offenbarung der Erfindung

Das in Referenz [1] beschriebene Modell ist auf einen spezifischen Anwendungsfall (z.B. dem Einsetzen eines bestimmten Steckers in eine bestimmte Steckerdose) trainiert und geht von einer kanonischen Greifkonfiguration des Steckers aus.

Es hat sich gezeigt, dass, wenn der Stecker auch nur leicht abweichend von der kanonischen Greifkonfiguration gegriffen wird, die Leistungsfähigkeit des Modells stark abnimmt, und wenn das Modell auf andere aber ähnliche Anwendungsfälle übertragen wird (z.B., wenn es sich um eine andere (auch nur leicht abweichende) Art Stecker handelt), die Leistungsfähigkeit des Modells signifikant abnimmt.

Die vorliegende Offenbarung bezieht sich auf ein Verfahren zum Steuern einer Robotervorrichtung zum Einsetzen eines ersten Objekts in ein zweites Objekt. Dieses Verfahren hat auch im Falle der voranstehend beschriebenen Veränderungen eine hohe Leistungsfähigkeit. Anschaulich wird ein robusteres Verfahren zum Einsetzen eines Objekts in ein anderes Objekt bereitgestellt. Dies wird beispielsweise dadurch erreicht, dass ein bedingtes neuronales Netzwerk (auch als konditionales neuronales Netzwerk bezeichnet; engl.: conditional neural network) eingesetzt wird, welches Informationen darüber, wie das Objekt von dem Greifwerkzeug gegriffen wird, als Bedingung verwendet.

Verschiedene Aspekte betreffen ein Verfahren zum Steuern einer Robotervorrichtung zum Einsetzen eines ersten Objekts in ein zweites Objekt, das Verfahren aufweisend: Steuern der Robotervorrichtung zum Aufnehmen des ersten Objekts (gemäß einer Aufnehm-Roboterkonfiguration) mittels eines Greifwerkzeugs der Robotervorrichtung; Bewegen des ersten Objekts in die Nähe des zweiten Objekts (gemäß einer initialen Robotertrajektorie); Erfassen mindestens eines Bildes, welches das zweite Objekt und das (mittels des Greifwerkzeugs aufgenommene und) sich in der Nähe des zweiten Objekts befindende erste Objekt zeigt; Ermitteln, unter Verwendung des mindestens einen Bildes und/oder mindestens eines anderen Bildes, welches das erste Objekt und das Greifwerkzeug zeigt, einer ersten Transformation, welche eine Transformation zwischen einem Koordinatensystem des ersten Objekts und einem Koordinatensystem des Greifwerkzeugs ist; Ermitteln einer zweiten Transformation, indem das mindestens eine Bild als Eingabe und die erste Transformation als Bedingung in ein bedingtes (konditionales) neuronales Netzwerk eingegeben werden, wobei die zweite Transformation eine Transformation zwischen dem Koordinatensystem des Greifwerkzeugs und einem Koordinatensystem des zweiten Objekts angibt; Ermitteln, unter Verwendung der zweiten Transformation, einer Robotertrajektorie zum Einsetzen des ersten Objekts in das zweite Objekt; und Steuern der Robotervorrichtung gemäß der Robotertrajektorie.

Im Folgenden werden verschiedene Ausführungsbeispiele angegeben.

Beispiel 1 ist das Verfahren zum Steuern der Robotervorrichtung zum Einsetzen des ersten Objekts in das zweite Objekt wie voranstehend beschrieben.

Beispiel 2 ist eingerichtet gemäß Beispiel 1, wobei das Ermitteln der ersten Transformation unter Verwendung des mindestens einen Bildes und/oder des mindestens einen anderen Bildes aufweist: Eingeben des mindestens einen Bildes und/oder des mindestens einen anderen Bildes in ein maschinelles Lernmodell, das eingerichtet ist, die erste Transformation in Reaktion auf die Eingabe des mindestens einen Bildes auszugeben.

Anschaulich kann das maschinelle Lernmodell darauf trainiert sein, anhand eines (oder mehr als eines) Bildes, das ein von dem Greifwerkzeug gegriffenes Objekt zeigt, eine Transformation zwischen dem Koordinatensystem des Objekts und dem Koordinatensystem des Greifwerkzeugs auszugeben.

In Beispiel 3 kann das Verfahren gemäß Beispiel 1 oder 2 optional ferner aufweisen: während des Bewegens des ersten Objekts in die Nähe des zweiten Objekts gemäß einer initialen Robotertrajektorie: (kontinuierliches) Erfassen (z.B. Messen) einer derzeitigen Kraft und eines derzeitigen Moments (z.B. mittels mindestens eines Kraft-Drehmoment-Sensors), mit welchen das Greifwerkzeug das erste Objekt aufgenommen hat (z.B. hält, greift, etc.); und Ermitteln, ob die derzeitige Kraft größer als oder gleich einem Kraft-Schwellenwert und das derzeitige Moment größer als oder gleich einem Moment-Schwellenwert ist; wobei die (angepasste) Robotertrajektorie mittels Ermittelns der ersten Transformation und der zweiten Transformation ermittelt wird und die Robotervorrichtung gemäß der Robotertrajektorie gesteuert wird, wenn die derzeitige Kraft größer als oder gleich dem Kraft-Schwellenwert und das derzeitige Moment größer als oder gleich dem Moment-Schwellenwert ist.

Anschaulich kann das erste Objekt gemäß einer initial ermittelten Robotertrajektorie bewegt werden, um in das zweite Objekt eingesetzt zu werden. Hierbei können die Kraft und das Moment oberhalb des jeweiligen Schwellenwertes angeben, dass eine Kollision (z.B. des ersten Objekts und/oder des Greifwerkzeugs mit dem zweiten Objekt) stattgefunden hat. Ist dies der Fall, kann dann gemäß des hierin (z.B. in Beispiel 1) beschriebenen Verfahrens eine neue, adaptierte Robotertrajektorie ermittelt werden, um das erste Objekt kollisionsfrei in das zweite Objekt einzusetzen. Anschaulich kann das hierin beschriebene Verfahren als Korrektur dienen, da dieses die Robotertrajektorie mit höherer Genauigkeit als die initiale Robotertrajektorie ermitteln kann.

Beispiel 4 ist eingerichtet gemäß einem der Beispiele 1 bis 3, wobei das bedingte neuronale Netzwerk eine Vielzahl von Schichten aufweist, von denen jede Schicht eingerichtet ist, auf jedes in der Schicht ermittelte Merkmal eine jeweilige affine Transformation in Abhängigkeit der eingegebenen Bedingung (also der ersten Transformation) anzuwenden.

Es hat sich gezeigt, dass ein solches bedingtes neuronales Netzwerk eine besonders hohe Erfolgsrate (und damit Genauigkeit der ermittelten Robotertrajektorie) beim Steuern von Roboterarmen hat.

Beispiel 5 ist eingerichtet gemäß einem der Beispiele 1 bis 4, wobei die zweite Transformation die Transformation zwischen dem Koordinatensystem des Greifwerkzeugs und dem Koordinatensystem des zweiten Objekts ist; oder wobei die zweite Transformation eine Transformation zwischen dem Koordinatensystem des ersten Objekts und dem Koordinatensystem des zweiten Objekts ist und anhand der ersten Transformation die Transformation zwischen dem Koordinatensystem des Greifwerkzeugs und dem Koordinatensystem des zweiten Objekts angibt.

Anschaulich kann die zweite Transformation die Transformation zwischen dem Koordinatensystem des Greifwerkzeugs und dem Koordinatensystem des zweiten Objekts entweder direkt oder indirekt angeben.

Beispiel 6 ist eingerichtet gemäß einem der Beispiele 1 bis 5, wobei das Steuern der Robotervorrichtung gemäß der Robotertrajektorie aufweist: Steuern eines Roboterarms der Robotervorrichtung, welcher das Greifwerkzeug (als Endeffektor) aufweist, gemäß der Robotertrajektorie.

Beispiel 7 ist eine Steuervorrichtung, die eingerichtet ist, das Verfahren gemäß einem der Beispiele 1 bis 6 auszuführen.

Beispiel 8 ist eine Robotervorrichtung, welche einen Roboterarm mit dem Greifwerkzeug und die Steuervorrichtung gemäß Beispiel 7 aufweist.

Beispiel 9 ist ein Computerprogramm mit Befehlen, die, wenn sie durch einen Prozessor ausgeführt werden, bewirken, dass der Prozessor das Verfahren gemäß einem der Beispiele 1 bis 6 durchführt.

Beispiel 10 ist ein computerlesbares Medium, das Befehle speichert, die, wenn sie durch einen Prozessor ausgeführt werden, bewirken, dass der Prozessor das Verfahren gemäß einem der Beispiele 1 bis 6 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
Figur 1 zeigt eine Robotervorrichtungsanordnung gemäß verschiedenen Aspekten;
Figur 2 ein Ablaufdiagramm eines Verfahrens zum Steuern einer Robotervorrichtung zum Einsetzen eines ersten Objekts in ein zweites Objekt gemäß verschiedenen Aspekten; und
Figur 3 zeigt ein schematisches Ablaufdiagramm zum Ermitteln einer Robotertrajektorie zum Einsetzen des ersten Objekts in das zweite Objekt gemäß verschiedenen Aspekten.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

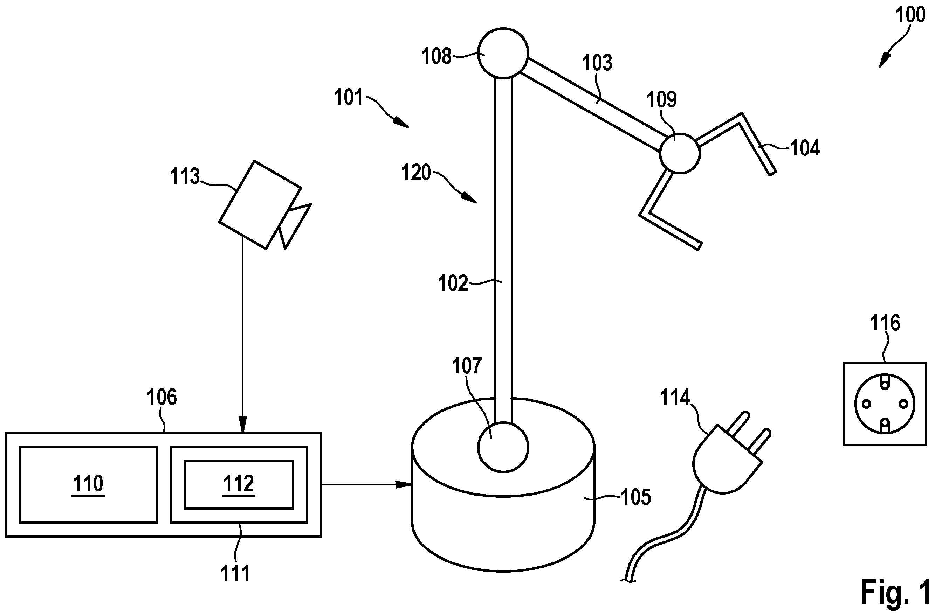

**FIG.1** zeigt eine Robotervorrichtungsanordnung 100 gemäß verschiedenen Aspekten. Die Robotervorrichtungsanordnung 100 kann eine Robotervorrichtung 101 (kurz: Roboter) aufweisen. Die Robotervorrichtung 101 kann einen Rotoberarm 120 zum Aufnehmen eines Objekts, zum Bewegen des aufgenommenen Objekts und zum Einsetzen des Objekts in ein anderes Objekt aufweisen.

Als ein "Einsetzen" eines Objekts in ein anderes Objekt, wie hierin beschrieben, kann jede Art von robotergestützter Einsetzaufgabe (engl.: insertion task) verstanden werden, bei der ein Objekt in ein anderes Objekt eingebracht wird, wie beispielsweise ein Einfügen, ein Einlegen, ein Einstecken, etc.

Zur Veranschaulichung wird die Einsetzaufgabe in verschiedenen Aspekten hierin als ein Einsetzen eines Steckers 114 in eine Steckdose 116 beschrieben. Es wird verstanden, dass dies der Veranschaulichung dient und dass das hierin beschriebene "Einsetzen" jede Art von Einsetzen eines Objekts in ein anderes Objekt sein kann, beispielsweise im Rahmen einer robotergestützten Fertigung, Montage, Bearbeitung, etc., im Rahmen einer Wartung, im Rahmen einer Aufgabe eines Haushaltsroboters, im Rahmen einer medizinischen Aufgabe eines Medizinroboters, etc. Anschaulich kann die hierin beschriebene Robotervorrichtung 101 jede Art von Robotervorrichtung sein, welche einen Roboterarm 120 aufweist, wie beispielsweise ein Fertigungsroboter, ein Wartungsroboter, ein Haushaltsroboter, ein Medizinroboter, etc.

Der Roboterarm 120 kann Roboterglieder 102, 103, 104 und einen Sockel (oder allgemein eine Halterung) 105 aufweisen, durch welche die Roboterglieder 102, 103, 104 getragen werden. Der Begriff "Roboterglieder " kann sich auf die beweglichen Teile der Robotervorrichtung 101 beziehen, deren Betätigung eine physische Interaktion mit der Umgebung ermöglicht, um beispielsweise die Einsetzaufgabe auszuführen.

Zur Steuerung der Robotervorrichtung 101 kann die Robotervorrichtungsanordnung 100 eine (Roboter) Steuervorrichtung 106 aufweisen, die eingerichtet ist, die Interaktion mit der Umgebung gemäß einem Steuerungsprogramm zu realisieren. Das letzte Element 104 (von dem Sockel 105 aus gesehen) der Roboterglieder 102, 103, 104 wird auch als Endeffektor 104 bezeichnet. Die Art des Endeffektors 104 kann festlegen, ob die Robotervorrichtung 101 imstande ist, greifende und/oder nicht-greifende Objektmanipulationen durchzuführen. Eine greifende Objektmanipulation kann sich auf eine Manipulation eines Objekts beziehen, bei der das Objekt gegriffen wird, wohingegen sich eine nicht-greifende Objektmanipulation auf eine Manipulation eines Objekts beziehen kann, bei der das Objekt nicht gegriffen wird. Folglich kann die Robotervorrichtung 101 zur greifenden Objektmanipulation fähig sein, wenn der Endeffektor 104 mindestens ein Greifwerkzeug (bei dem es sich auch um eine Ansaugvorrichtung (z.B. einen Saugkopf) oder dergleichen handeln kann) aufweist. In jedem Fall kann die Robotervorrichtung 101 zur nicht-greifenden Objektmanipulation fähig sein, beispielsweise indem das Objekt (ohne es zu greifen) geschoben wird, um zum Beispiel dessen laterale Position und/oder Orientierung zu ändern.

Die anderen Roboterglieder 102, 103 (näher am Sockel 105) können eine Positionierungsvorrichtung bilden, so dass zusammen mit dem Endeffektor 104 ein Roboterarm 120 (oder Gelenkarm) mit dem Endeffektor 104 an seinem Ende vorgesehen ist. Der Roboterarm 120 kann ein mechanischer Arm sein, der ähnliche Funktionen wie ein menschlicher Arm erfüllen kann (möglicherweise mit einem Werkzeug an seinem Ende).

Der Roboterarm 120 kann Verbindungselemente 107, 108, 109 aufweisen, welche die Roboterglieder 102, 103, 104 miteinander und mit dem Sockel 105 verbinden. Ein Verbindungselement 107, 108, 109 kann ein oder mehrere Gelenke aufweisen, von denen jedes eine Drehbewegung und/oder eine Translationsbewegung (d.h. eine Verschiebung) für zugehörige Roboterglieder relativ zueinander bereitstellen kann. Die Bewegung der Roboterglieder 102, 103, 104 kann mit Hilfe von Stellgliedern eingeleitet werden, die von der Steuervorrichtung 106 gesteuert werden.

Der Begriff "Stellglied" kann als eine Komponente verstanden werden, die geeignet ist, als Reaktion darauf, dass sie angetrieben wird, einen Mechanismus zu beeinflussen. Das Stellglied kann von der Steuervorrichtung 106 ausgegebene Anweisungen (die sogenannte Aktivierung) in mechanische Bewegungen umsetzen. Das Stellglied, z.B. ein elektromechanischer Wandler, kann eingerichtet werden, elektrische Energie als Reaktion auf seine Ansteuerung in mechanische Energie umzuwandeln.

Der Begriff "Steuervorrichtung" (auch als "Steuereinrichtung" bezeichnet) kann als jede Art von logischer Implementierungseinheit verstanden werden, die beispielsweise eine Schaltung und/oder einen Prozessor beinhalten kann, der in der Lage ist, in einem Speichermedium gespeicherte Software, Firmware oder eine Kombination derselben auszuführen, und die Anweisungen, z.B. an ein Stellglied im vorliegenden Beispiel, erteilen kann. Die Steuervorrichtung kann beispielsweise durch Programmcode (z.B. Software) eingerichtet werden, den Betrieb eines Systems, im vorliegenden Beispiel eines Roboters, zu steuern.

In dem vorliegenden Beispiel kann die Steuervorrichtung 106 einen Computer 110 und einen Speicher 111, der Code und Daten speichert, auf deren Grundlage der Computer 110 die Robotervorrichtung 101 steuert, aufweisen. Gemäß verschiedener Ausführungsformen kann die Steuervorrichtung 106 die Robotervorrichtung 101 auf der Grundlage eines im Speicher 111 gespeicherten Roboter-Steuerungsmodells 112 steuern.

Als ein Beispiel kann die greifende Aufgabe der Robotervorrichtung 101 die Einsetzaufgabe sein, also ein Aufnehmen (z.B. Greifen oder Ansaugen) des Steckers 114 und ein Bewegen des aufgenommenen Steckers 114 und ein Einsetzen des Steckers 114 in die Steckdose 116. Um diese Aufgabe auszuführen, kann die Steuervorrichtung 106 Bilder des Arbeitsbereichs der Robotervorrichtung 101, in dem sich die der Stecker 114 und die Steckdose 116 befinden, verwenden.

Diese Bilder der Umgebung der Robotervorrichtung 101 können von einem oder mehreren Bildgebungssensoren 113 geliefert werden (z. B. am Roboterarm 120 angebracht oder auf andere Weise, so dass die Steuervorrichtung 106 den Blickwinkel der ein oder mehreren Bildgebungssensoren 113 steuern kann).

Ein Bildgebungssensor, wie hierin verwendet, kann zum Beispiel eine Kamera (z.B. eine Standardkamera, eine Digitalkamera, eine Infrarotkamera, eine Stereokamera, etc.), ein Radar-Sensor, ein LIDAR-Sensor, ein Ultraschallsensor, etc. sein. Daher kann ein Bild ein RGB-Bild, ein RGB-D-Bild oder ein Tiefenbild (auch als D-Bild bezeichnet) sein. Ein hierin beschriebenes Tiefenbild kann jede Art von Bild sein, das Tiefeninformationen aufweist. Anschaulich kann ein Tiefenbild 3-dimensionale Informationen zu ein oder mehreren Objekten aufweisen. Ein hierin beschriebenes Tiefenbild kann zum Beispiel eine Punktwolke aufweisen, die von einem LIDAR-Sensor und/oder einem Radar-Sensor bereitgestellt wird. Ein Tiefenbild kann zum Beispiel ein von einem LIDAR-Sensor bereitgestelltes Bild mit Tiefeninformationen sein.

Die Steuervorrichtung 106 kann eingerichtet sein, den Roboterarm 120 in Reaktion auf eine Eingabe mindestens eines Bildes in das Roboter-Steuerungsmodells 112 basierend auf einer Ausgabe des Roboter-Steuerungsmodells 112 zu steuern.

Das Roboter-Steuerungsmodells 112 kann ein maschinelles Lernmodell aufweisen. Gemäß verschiedenen Aspekten kann das maschinelle Lernmodell erzeugt (z.B. gelernt oder trainiert) werden während die Robotervorrichtung 101 nicht in Betrieb ist. Das erzeugte maschinelle Lernmodell kann dann während des Betriebs der Robotervorrichtung 101 verwendet werden, um von der Robotervorrichtung 101 auszuführende Fertigkeiten zu ermitteln. Optional kann das erzeugte maschinelle Lernmodell während des Betriebs der Robotervorrichtung 101 zusätzlich adaptiert (z.B. trainiert) werden (auch als Online-Lernen bezeichnet).

Gemäß verschiedenen Aspekten kann das maschinelle Lernmodell ein bedingte (konditionales) neuronales Netzwerk 306 aufweisen oder sein. Das hierin beschriebene bedingte neuronale Netzwerk 306 kann jede Art von bedingten neuronalem Netzwerk sein, also jede Art von neuronalem Netzwerk, in welches zusätzlich zur Eingabe eine Bedingung (z.B. ein Kontext) eingegeben werden kann. Beispielsweise kann jede Schicht des bedingten neuronalen Netzwerks 306 eingerichtet sein, auf jedes in der Schicht ermittelte Merkmal eine jeweilige affine Transformation in Abhängigkeit der eingegebenen Bedingung anzuwenden. Anschaulich kann jede Schicht eine merkmalsweise affine Transformation der Merkmale in Abhängigkeit der Bedingung durchführen. Zum Beispiel kann das bedingte neuronale Netzwerk 306 eine FiLM-Architektur aufweisen, wie in E. Perez: "FiLM: Visual Reasoning with a General Conditioning Layer", arXiv:1709.07871, 2017 beschrieben. Es wird verstanden, dass dies ein veranschaulichendes Beispiel ist und dass das bedingte neuronale Netzwerk 306 jede andere Architektur aufweisen kann.

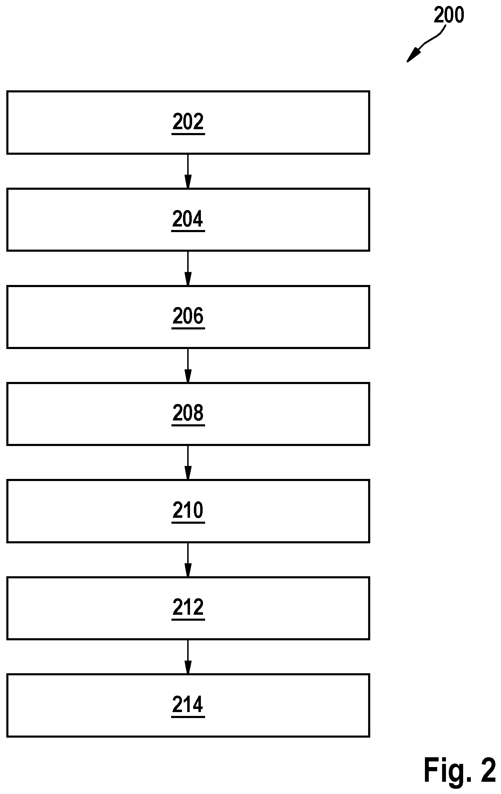

**FIG.2** zeigt ein Ablaufdiagramm eines (computerimplementierten) Verfahrens 200 zum Steuern einer Robotervorrichtung zum Einsetzen eines ersten Objekts in ein zweites Objekt gemäß verschiedenen Aspekten.

Das Verfahren 200 kann (in 202) ein Steuern der Robotervorrichtung zum Aufnehmen des ersten Objekts (gemäß einer Aufnehm-Roboterkonfiguration) mittels eines Greifwerkzeugs der Robotervorrichtung aufweisen.

Das Verfahren 200 kann (in 204) ein Bewegen des ersten Objekts in die Nähe des zweiten Objekts (gemäß einer initialen Robotertrajektorie) aufweisen.

Das Verfahren 200 kann (in 206) ein Erfassen mindestens eines Bildes, welches das zweite Objekt und das (mittels des Greifwerkzeugs aufgenommene und) sich in der Nähe des zweiten Objekts befindende erste Objekt zeigt, aufweisen.

Das Verfahren 200 kann (in 208) ein Ermitteln, unter Verwendung des mindestens einen Bildes und/oder mindestens eines anderen Bildes, welches das erste Objekt und das Greifwerkzeug zeigt, einer ersten Transformation, welche eine Transformation zwischen einem Koordinatensystem des ersten Objekts und einem Koordinatensystem des Greifwerkzeugs ist, aufweisen.

Das Verfahren 200 kann (in 210) ein Ermitteln einer zweiten Transformation aufweisen, indem das mindestens eine Bild als Eingabe und die erste Transformation als Bedingung in ein bedingtes (konditionales) neuronales Netzwerk eingegeben werden. Die zweite Transformation kann eine Transformation zwischen dem Koordinatensystem des Greifwerkzeugs und einem Koordinatensystem des zweiten Objekts (direkt oder indirekt) angeben.

Das Verfahren 200 kann (in 212) ein Ermitteln, unter Verwendung der zweiten Transformation, einer Robotertrajektorie zum Einsetzen des ersten Objekts in das zweite Objekt aufweisen.

Das Verfahren 200 kann (in 214) ein Steuern der Robotervorrichtung gemäß der Robotertrajektorie aufweisen.

Im Folgenden werden verschiedene Aspekte des Verfahrens 200 detaillierter beschrieben, wobei zur Veranschaulichung das erste Objekt als Stecker 114 und das zweite Objekt als Steckdose 116 beschrieben werden.

Gemäß verschiedenen Aspekten können (mittels den ein oder mehreren Bildgebungssensoren 113) ein oder mehrere Bilder der Umgebung der Robotervorrichtung 101 aufgenommen werden. Diese ein oder mehreren Bilder können den Stecker 114 und die Steckdose zeigen. Anhand dieser ein oder mehreren Bilder kann die Steuervorrichtung 106 den Stecker 114 und die Steckdose 116 erkennen (z.B. lokalisieren), eine Aufnehm-Roboterkonfiguration ermitteln zum Aufnehmen (z.B. Greifen) des Steckers 114 mittels des Greifwerkzeugs 104 und eine initiale Robotertrajektorie zum Bewegen des aufgenommenen Steckers 114 in die Nähe der Steckdose 116 ermitteln und den Roboterarm 120 entsprechend steuern.

In manchen Aspekten können die Schritte 206 bis 214 des Verfahrens 200 immer ausgeführt werden, sobald sich der aufgenommene Stecker 114 in der Nähe der Steckdose 116 befindet. In anderen Aspekten können diese Schritte 206 bis 214 des Verfahrens 200 nur unter vordefinierten Bedingungen ausgeführt werden. Beispielsweise kann, wie in Referenz [1] beschrieben, während des Bewegens des Steckers 114 (in 204) (kontinuierlich) eine derzeitige Kraft und ein derzeitiges Moment (z.B. mittels mindestens eines Kraft-Drehmoment-Sensors), mit welchen das Greifwerkzeug 104 den Stecker 114 aufgenommen hat (z.B. hält, greift, ansaugt, etc.), erfasst (z.B. gemessen) werden. Die Schritte 206 bis 214 des Verfahrens 200 können dann ausgeführt werden, wenn die derzeitige Kraft größer als oder gleich einem Kraft-Schwellenwert und/oder das derzeitige Moment größer als oder gleich einem Moment-Schwellenwert ist. Anschaulich können die Kraft und das Moment oberhalb des jeweiligen Schwellenwertes auf eine Kollision zwischen Stecker 114 und Steckdose 116 hinweisen und mittels des Verfahrens 200 kann dann ermittelt werden, wie der Stecker 114 kollisionsfrei in die Steckdose 116 eingesetzt werden kann. Optional können die Kraft und/oder das Moment als Eingabe (zusätzlich zu dem mindestens einen Bild) in das bedingte neuronale Netzwerk 306 eingegeben werden.

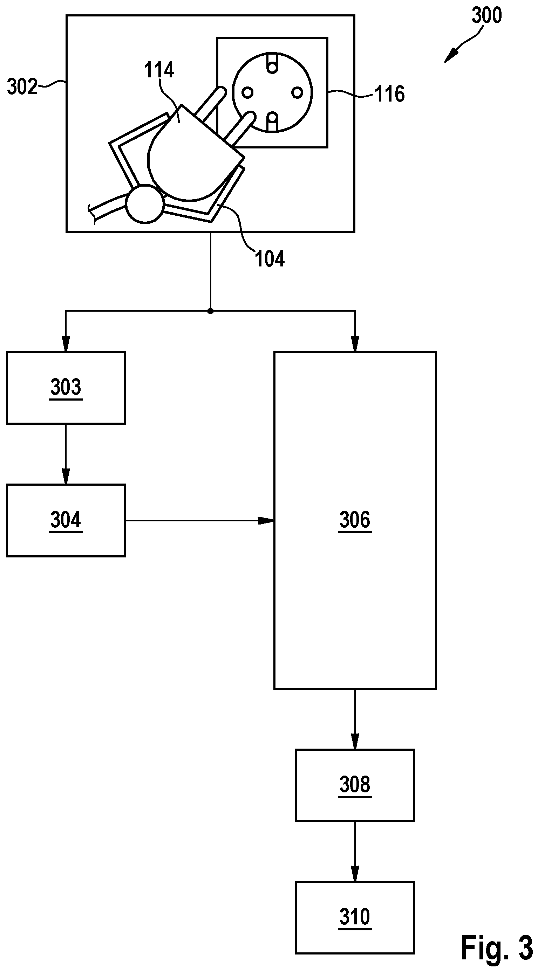

**FIG.3** zeigt ein schematisches Ablaufdiagramm 300 zum Ermitteln der Robotertrajektorie zum Einsetzen des Steckers 114 (als beispielhaftes erstes Objekt) in die Steckdose 116 (als beispielhaftes zweites Objekt) gemäß verschiedenen Aspekten.

In 206 kann das mindestens eine Bild 302 erfasst werden, welches den von dem Greifwerkzeug 104 aufgenommenen Stecker 114 in der Nähe der Steckdose 116 zeigt. In manchen Aspekten kann hierzu ein Bild verwendet werden. In anderen Aspekten können hierzu mehrere Bilder (z.B. aus verschiedenen Perspektiven) verwendet werden.

In 208 kann dann die erste Transformation 304 zwischen dem Koordinatensystem des Steckers 114 und dem Koordinatensystem des Greifwerkzeugs 104 ermittelt werden. Hierzu kann das mindestens eine Bild 302 (wie zur Veranschaulichung in FIG.3 gezeigt), ein oder mehrere Bilder einer Vielzahl von Bildern, wenn das mindestens eine Bild 302 eine Vielzahl von Bildern ist, oder ein oder mehrere ganz andere Bilder verwendet werden. Anschaulich können zum Ermitteln der ersten Transformation 304 ein oder mehrere Bilder verwendet werden, welche zumindest den Stecker 114 und das Greifwerkzeug 104, mittels welchem der Stecker 114 gehalten wird, zeigen. Diese ein oder mehreren Bilder können beispielsweise bereits erfasst werden, bevor und/oder während der Stecker 114 (in 204) in die Nähe der Steckdose 116 bewegt wird. Die erste Transformation 304 kann anschaulich angeben, wie der Stecker 114 von dem Greifwerkzeug 104 gegriffen wird.

Die erste Transformation 304 kann unter Verwendung eines Modells 303 ermittelt werden, welches eingerichtet ist, die erste Transformation 304 in Reaktion auf die Eingabe der ein oder mehreren Bilder auszugeben. Zum Beispiel kann das Modell 303 ein maschinelles Lernmodell sein. Wird zum Ermitteln der ersten Transformation 304 das mindestens eine Bild 302 verwendet, so kann das maschinelles Lernmodell des Steuerungsmodells 112 zusätzlich zu dem bedingten neuronalen Netzwerk 306 einen (zusätzlichen) Vorhersagekopf (engl.: prediciton head) aufweisen, welcher eingerichtet ist, die erste Transformation 304 vorherzusagen, welche dann wiederum als Bedingung in das bedingte neuronale Netzwerk 306 eingegeben wird. Alternativ kann das Steuerungsmodell 112 ein zusätzliches Modell (z.B. maschinelles Lernmodell) aufweisen, welches eingerichtet ist, die erste Transformation 304 anhand der ein oder mehreren Bilder vorherzusagen.

In 210 werden das mindestens eine Bild 302 als Eingabe und die erste Transformation 304 als Bedingung in das bedingte neuronale Netzwerk 306 eingegeben, um die zweite Transformation 308 zu ermitteln (z.B. vorherzusagen). Anschaulich kann die zweite Transformation 308 ermittelt werden, indem der Kontext, wie der Stecker 114 von dem Greifwerkzeug 104 gegriffen wird, berücksichtigt wird.

Die zweite Transformation 308 gibt die Transformation zwischen dem Koordinatensystem des Greifwerkzeugs 104 und einem Koordinatensystem der Steckdose 116 direkt oder indirekt an. Beispielsweise kann die zweite Transformation 308 die Transformation zwischen dem Koordinatensystem des Steckers 114 und dem Koordinatensystem der Steckdose 116 sein und anhand der ersten Transformation 304 kann dann die Transformation zwischen dem Koordinatensystem des Greifwerkzeugs 104 und dem Koordinatensystem der Steckdose 116 ermittelt werden. Die Transformation zwischen dem Koordinatensystem des Greifwerkzeugs 104 und dem Koordinatensystem der Steckdose 116 kann auch als Einsetzdifferenz oder Einsetzdelta bezeichnet werden.

In 212 kann dann anhand der zweiten Transformation 308 die Robotertrajektorie 310 zum Einsetzen des Steckers 114 in die Steckdose 116 ermittelt werden.

## Patentansprüche

1. Verfahren (200) zum Steuern einer Robotervorrichtung (101) zum Einsetzen eines ersten Objekts (114) in ein zweites Objekt (116), das Verfahren (200) aufweisend:
• Steuern (202) der Robotervorrichtung (101) zum Aufnehmen des ersten Objekts (114) mittels eines Greifwerkzeugs (104) der Robotervorrichtung (101);
• Bewegen (204) des ersten Objekts (114) in die Nähe des zweiten Objekts (116);
• Erfassen (206) mindestens eines Bildes (302), welches das zweite Objekt (116) und das sich in der Nähe des zweiten Objekts (116) befindende erste Objekt (114) zeigt;
• Ermitteln (208), unter Verwendung des mindestens einen Bildes (302) und/oder mindestens eines anderen Bildes, welches das erste Objekt (114) und das Greifwerkzeug (104) zeigt, einer ersten Transformation (304), welche eine Transformation zwischen einem Koordinatensystem des ersten Objekts (114) und einem Koordinatensystem des Greifwerkzeugs (104) ist;
• Ermitteln (210) einer zweiten Transformation (308), indem das mindestens eine Bild (302) als Eingabe und die erste Transformation (304) als Bedingung in ein bedingtes neuronales Netzwerk (306) eingegeben werden, wobei die zweite Transformation (308) eine Transformation zwischen dem Koordinatensystem des Greifwerkzeugs (104) und einem Koordinatensystem des zweiten Objekts (116) angibt;
• Ermitteln (212), unter Verwendung der zweiten Transformation (308), einer Robotertrajektorie (310) zum Einsetzen des ersten Objekts (114) in das zweite Objekt (116); und
• Steuern (214) der Robotervorrichtung (101) gemäß der Robotertrajektorie (310).

2. Verfahren (200) gemäß Anspruch 1,
wobei das Ermitteln (208) der ersten Transformation (304) unter Verwendung des mindestens einen Bildes (302) und/oder des mindestens einen anderen Bildes aufweist:
Eingeben des mindestens einen Bildes (302) und/oder des mindestens einen anderen Bildes in ein maschinelles Lernmodell, das eingerichtet ist, die erste Transformation (304) in Reaktion auf die Eingabe des Bildes auszugeben.

3. Verfahren (200) gemäß Anspruch 1 oder 2, ferner aufweisend:
während des Bewegens (204) des ersten Objekts (114) in die Nähe des zweiten Objekts (116) gemäß einer initialen Robotertrajektorie:
Erfassen einer derzeitigen Kraft und eines derzeitigen Moments, mit welchen das Greifwerkzeug (104) das erste Objekt (114) aufgenommen hat; und
Ermitteln, ob die derzeitige Kraft größer als oder gleich einem Kraft-Schwellenwert und das derzeitige Moment größer als oder gleich einem Moment-Schwellenwert ist;
wobei die Robotertrajektorie (310) mittels Ermittelns der ersten Transformation (304) und der zweiten Transformation (308) ermittelt wird und die Robotervorrichtung (101) gemäß der Robotertrajektorie (310) gesteuert wird, wenn die derzeitige Kraft größer als oder gleich dem Kraft-Schwellenwert und das derzeitige Moment größer als oder gleich dem Moment-Schwellenwert ist.

4. Verfahren (200) gemäß einem der Ansprüche 1 bis 3,
wobei das bedingte neuronale Netzwerk (306) eine Vielzahl von Schichten aufweist, von denen jede Schicht eingerichtet ist, auf jedes in der Schicht ermittelte Merkmal eine jeweilige affine Transformation in Abhängigkeit der eingegebenen Bedingung anzuwenden.

5. Verfahren (200) gemäß einem der Ansprüche 1 bis 4,
wobei die zweite Transformation (308) die Transformation zwischen dem Koordinatensystem des Greifwerkzeugs (104) und dem Koordinatensystem des zweiten Objekts (116) ist; oder
wobei die zweite Transformation (308) eine Transformation zwischen dem Koordinatensystem des ersten Objekts (114) und dem Koordinatensystem des zweiten Objekts (116) ist und anhand der ersten Transformation (304) die Transformation zwischen dem Koordinatensystem des Greifwerkzeugs (104) und dem Koordinatensystem des zweiten Objekts (116) angibt.

6. Verfahren (200) gemäß einem der Ansprüche 1 bis 5,
wobei das Steuern (214) der Robotervorrichtung (101) gemäß der Robotertrajektorie (310) aufweist:
Steuern eines Roboterarms (120) der Robotervorrichtung (101), welcher das Greifwerkzeug (104) aufweist, gemäß der Robotertrajektorie (310).

7. Steuervorrichtung (106), die eingerichtet ist, das Verfahren (200) gemäß einem der Ansprüche 1 bis 6 auszuführen.

8. Robotervorrichtung (101), welche einen Roboterarm (120) mit dem Greifwerkzeug (104) und die Steuervorrichtung (106) gemäß Anspruch 7 aufweist.

9. Computerprogramm mit Befehlen, die, wenn sie durch einen Prozessor ausgeführt werden, bewirken, dass der Prozessor das Verfahren (200) gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren (200) gemäß einem der Ansprüche 1 bis 6 durchführt.
